# DEMANDE DE BREVET EUROPEEN

(11) **EP 3 467 694 A1**
(43) Date de publication de la demande: **10.04.2019**
(21) Numéro de dépôt: 18198370.1
(22) Date de dépôt: 02.10.2018
(51) Int. Cl.: G06F 21/32, G06K 9/00

(54) **PROCÉDÉ ET DISPOSITIF DE RECONNAISSANCE BIOMÉTRIQUE COMBINÉE**

(30) Priorité: 04.10.2017 FR 1759285
(71) Demandeur: Idemia Identity & Security France, 92400 Courbevoie (FR)
(72) Inventeur: RIEUL, François, 92130 Issy-Les-Moulineaux (FR); COUTURIER, Lauriane, 92130 Issy-Les-Moulineaux (FR); JARLEGAN, Marie, 92130 Issy-Les-Moulineaux (FR); CHASTEL, Pierre, 92130 Issy-Les-Moulineaux (FR)
(74) Mandataire: Lavialle, Bruno François Stéphane

(57) **Abrégé**

Procédé de reconnaissance biométrique d'individu, comprenant les étapes de :
- d'effectuer au moins deux reconnaissances biométriques à partir d'ensembles distincts de caractéristiques biométriques détectées sur un individu lors d'au moins de première et deuxième opérations de détection ;
- détecter un troisième ensemble de caractéristiques biométriques lors de la première détection et un quatrième ensemble de caractéristiques biométriques lors de la deuxième détection,
- vérifier que le troisième ensemble de caractéristiques biométriques coïncide avec le quatrième ensemble de caractéristiques biométriques.

Procédé d'enrôlement correspondant et dispositif pour la mise en oeuvre de ces procédés.

## Description

La présente invention concerne le domaine de la reconnaissance biométrique.

### ETAT DE LA TECHNIQUE

Il est connu de recourir à des procédés de reconnaissance biométrique pour déterminer si des individus sont autorisés à réaliser une action telle que pénétrer dans un lieu ou accéder à des informations par exemple via un système informatique.

Un procédé de reconnaissance biométrique comprend classiquement les étapes de :
- détecter des caractéristiques biométriques sur un individu ;
- comparer les caractéristiques biométriques détectées à des caractéristiques biométriques mémorisées ;
- considérer l'individu reconnu lorsque les caractéristiques biométriques détectées coïncident avec les caractéristiques biométriques mémorisées.

Pour rendre la fraude plus difficile, certains procédés de reconnaissance biométrique comprennent les étapes de :
- effectuer une première reconnaissance biométrique à partir d'un premier ensemble de caractéristiques biométriques détectées sur un individu lors d'une première opération de détection ;
- effectuer une deuxième reconnaissance biométrique à partir d'un deuxième ensemble de caractéristiques biométriques détectées sur cet individu lors d'une deuxième opération de détection, le deuxième ensemble de caractéristiques biométriques étant distinct du premier ensemble de caractéristiques biométriques ;
- considérer l'individu reconnu en cas de succès des deux reconnaissances biométriques.

Dans une mise en oeuvre classique, la première reconnaissance biométrique est effectuée en extrayant des premières caractéristiques biométriques d'un portrait d'un document d'identité et en les comparant à des premières caractéristiques biométriques détectées sur le porteur du document d'identité. La deuxième reconnaissance biométrique est effectuée en extrayant des deuxièmes caractéristiques biométriques, celles d'une empreinte digitale mémorisées dans le document d'identité, et en les comparant à des deuxièmes caractéristiques biométriques détectées sur le porteur du document d'identité.

Il apparaît que ce procédé de reconnaissance biométrique pourrait être trompé en utilisant, pour les deux reconnaissances biométriques, des caractéristiques biométriques appartenant à deux individus distincts.

### OBJET DE L'INVENTION

Un but de l'invention est d'améliorer la robustesse de ces procédés de reconnaissance biométrique.

### BREF EXPOSE DE L'INVENTION

A cet effet, on prévoit, selon l'invention, un procédé de reconnaissance biométrique d'individu, comprenant les étapes de :
- effectuer une première reconnaissance biométrique à partir d'un premier ensemble de caractéristiques biométriques détectées sur un individu lors d'une première opération de détection ;
- effectuer une deuxième reconnaissance biométrique à partir d'un deuxième ensemble de caractéristiques biométriques détectées sur cet individu lors d'une deuxième opération de détection, le deuxième ensemble de caractéristiques biométriques étant distinct du premier ensemble de caractéristiques biométriques ;

Le procédé comprend les étapes de :
- détecter un troisième ensemble de caractéristiques biométriques lors de la première détection et un quatrième ensemble de caractéristiques biométriques lors de la deuxième détection,
- vérifier que le troisième ensemble de caractéristiques biométriques correspond au quatrième ensemble de caractéristiques biométriques ;
- considérer l'individu reconnu en cas de succès des reconnaissances biométriques et si le troisième ensemble de caractéristiques biométriques correspond au quatrième ensemble de caractéristiques biométriques.

Ainsi, la comparaison du troisième ensemble de caractéristiques et du quatrième ensemble de caractéristiques permet d'assurer que le premier ensemble de caractéristiques et le deuxième ensemble de caractéristiques appartiennent au même individu. Ceci permet donc de valider la reconnaissance biométrique et donc d'augmenter sa fiabilité.

De préférence, le troisième ensemble de caractéristiques biométriques et le quatrième ensemble de caractéristiques biométriques comprennent des paramètres du flux sanguin de l'individu tels que la fréquence de pulsation et la phase.

Le débit sanguin est affecté par les pulsations produites par le coeur : les variations de débit sanguin qui en résultent sont détectables sur toute partie du corps humain irriguée par des vaisseaux sanguins.

L'invention a également pour objet un procédé d'enrôlement automatique d'un individu par enregistrement d'un premier ensemble de caractéristiques biométriques détectées sur un individu lors d'une première opération de détection et d'un deuxième ensemble de caractéristiques biométriques détectées sur cet individu lors d'une deuxième opération de détection aux fins de réalisation ultérieure d'une reconnaissance biométrique, le deuxième ensemble de caractéristiques biométriques étant distinct du premier ensemble de caractéristiques biométriques.

Le procédé comprend les étapes de :
- détecter un troisième ensemble de caractéristiques biométriques lors de la première détection et un quatrième ensemble de caractéristiques biométriques lors de la deuxième détection,
- vérifier que le troisième ensemble de caractéristiques biométriques coïncide avec le quatrième ensemble de caractéristiques biométriques ;
- considérer l'enrôlement valable si le troisième ensemble de caractéristiques biométriques coïncide avec le quatrième ensemble de caractéristiques biométriques.

Là encore, la comparaison du troisième ensemble de caractéristiques et du quatrième ensemble de caractéristiques permet d'assurer que le premier ensemble de caractéristiques et le deuxième ensemble de caractéristiques appartiennent au même individu. Ceci permet donc de révéler une tentative de fraude lors de l'enrôlement.

L'invention concerne enfin un dispositif de reconnaissance biométrique comprenant une unité de traitement reliée à au moins un organe d'acquisition de deux ensembles distincts de caractéristiques biométriques lors de deux opérations de détection, et un organe d'acquisition au cours des deux opérations de détection d'un troisième ensemble de caractéristiques biométriques et d'un quatrième ensemble de caractéristiques biométriques, l'unité de traitement étant agencée pour exécuter un programme informatique de manière à mettre en oeuvre un procédé de reconnaissance et/ou le procédé d'enrôlement selon l'invention.

D'autres caractéristiques et avantages de l'invention ressortiront à la lecture de la description qui suit de modes de réalisation particuliers non limitatifs de l'invention.

### BREVE DESCRIPTION DES FIGURES

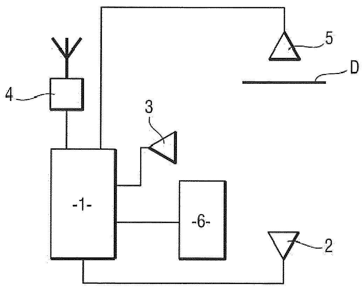

Il sera fait référence à la figure unique annexée représentant schématiquement un dispositif pour la mise en oeuvre du procédé d'enrôlement et du procédé de reconnaissance biométrique de l'invention.

### DESCRIPTION DETAILLEE DE L'INVENTION

Le dispositif et les procédés de l'invention sont ici décrits en relation avec une reconnaissance biométrique double basée d'une part sur des caractéristiques biométriques du visage, ci-après le premier ensemble de caractéristiques, et d'autre part sur des caractéristiques biométriques de l'empreinte d'un doigt, ci-après le deuxième ensemble de caractéristiques.

L'invention est ici décrite en application au contrôle d'identité à partir d'un document d'identité D, tel qu'un passeport biométrique. Un tel document d'identité comprend une zone lisible optiquement par machine au moyen d'un programme de reconnaissance de caractères (ce programme est couramment appelé OCR). Dans cette zone sont imprimés notamment les nom et prénoms du titulaire du passeport, sa date de naissance, ainsi que le numéro, le pays et la date d'expiration du passeport. Un tel document d'identité comprend également un module mémoire sous la forme d'un circuit électronique qui est fixé dans la couverture du document et qui comprend un circuit intégré et une antenne de communication en champ proche (ou NFC) par radiofréquence (le circuit électronique est conforme à la norme ISO 14443). Le module mémoire est agencé pour effectuer des calculs cryptographiques et contient sous forme numérisée la photographie faciale du titulaire du document d'identité et des données biométriques relatives à au moins une empreinte digitale dans le présent exemple.

En référence à la figure, le dispositif pour la mise en oeuvre du procédé de reconnaissance selon l'invention comprend une unité de traitement 1 reliée à :
- un lecteur d'empreinte digitale 2 pour capturer au moins une image d'une empreinte digitale d'un individu porteur d'un document d'identité D,
- une caméra faciale 3 agencée pour capturer des images du visage de l'individu,
- un émetteur/récepteur radiofréquence 4 pour communiquer sans fil avec le module mémoire incorporé dans le document d'identité D,
- une caméra de lecture 5 agencée pour lire des informations figurant dans la zone lisible du document d'identité D,
- un écran 6 pour afficher des instructions d'utilisation du dispositif.

L'unité de traitement 1 comprend un processeur relié à une mémoire contenant des programmes informatiques de telle manière que le processeur puisse exécuter ces programmes et commander les différents composants auxquels elle est reliée. L'un de ces programmes informatiques comprend des instructions pour la mise en oeuvre du procédé d'enrôlement automatique et du procédé de reconnaissance biométrique selon l'invention.

Le procédé d'enrôlement automatique permet de mémoriser les caractéristiques biométriques d'individus de telle manière que ces individus puissent faire ultérieurement l'objet d'une reconnaissance biométrique.

Le programme informatique commande l'unité de traitement 1 pour la réalisation des étapes du procédé d'enrôlement d'un individu dont le module mémoire du document d'identité D est vierge.

Le procédé d'enrôlement automatique selon l'invention comprend une première étape de capture d'images du visage de l'individu au moyen de la caméra faciale 3. Lors d'une première étape de détection, les images sont traitées par l'unité de traitement 1 pour en extraire :
- des caractéristiques biométriques de visage de l' individu formant le premier ensemble de caractéristiques biométriques ;
- une fréquence et une phase de pulsation du flux sanguin formant un troisième ensemble de caractéristiques biométriques.

Le procédé d'enrôlement automatique selon l'invention se poursuit par une deuxième étape de capture d'images des empreintes digitales de l'individu au moyen du capteur optique d'empreinte 2. Lors d'une deuxième étape de détection, les images sont traitées par l'unité de traitement 1 pour en extraire :
- des caractéristiques biométriques d'empreintes digitales de l'individu formant le deuxième ensemble de caractéristiques biométriques ;
- une fréquence et une phase de pulsation du flux sanguin formant un quatrième ensemble de caractéristiques biométriques.

On note que le deuxième ensemble de caractéristiques biométriques, ici des caractéristiques biométriques d'empreinte digitale, est distinct du premier ensemble de caractéristiques biométriques ici des caractéristiques biométriques de visage. On note également que le troisième ensemble de caractéristiques biométriques comprend les mêmes paramètres de flux sanguin que le quatrième de caractéristiques biométriques, la différence étant que ces paramètres n'ont pas été détectés sur la même partie du corps de l'individu.

Le procédé d'enrôlement se poursuit par une double vérification :
- la vérification que le troisième ensemble de caractéristiques biométriques correspond au quatrième ensemble de caractéristiques biométriques ;
- la vérification que le premier ensemble de caractéristiques biométriques coïncide avec les caractéristiques biométriques de visages qui sont extraites d'une photographie numérisée du titulaire du document d'identité D.

L'opération de vérification de correspondance du troisième ensemble de caractéristiques biométriques et du quatrième ensemble de caractéristiques biométriques consiste donc à vérifier que :
- la fréquence de pulsation détectée lors de la première détection est identique à la fréquence de pulsation détectée lors de la deuxième détection ;
- la phase détectée lors de la première détection correspond à la phase détectée lors de la deuxième détection.

Pour comparer la phase de la pulsation sanguine détectée à un endroit du corps humain et la phase de la pulsation sanguine détectée à un autre endroit du corps humain, il est tenu compte de la différence de temps de propagation de la pulsation sanguine entre le coeur et ces deux endroits. En effet, si la première détection est effectuée sur une portion du corps humain située à une même distance du coeur que la portion du corps humain sur laquelle est effectuée la deuxième détection, la phase détectée lors de la première détection est identique à la phase détectée lors de la deuxième détection. En revanche, si les deux portions de corps sont à des distances différentes du coeur, il y a une différence de temps de propagation de la pulsation jusqu'aux deux portions du corps : la phase détectée lors de la première détection et la phase détectée lors de la deuxième détection sont décalées de la différence de temps de propagation.

L'opération de vérification de la coïncidence du premier ensemble de caractéristiques biométriques est effectué de manière classique en utilisant un algorithme de reconnaissance biométrique (ou algorithme de « matching ») connu en lui-même.

Si ces vérifications sont validées, l'unité de traitement 1 considère l'enrôlement comme valable.

L'unité de traitement 1 entre alors en communication avec le module mémoire du document D via l'émetteur/récepteur 4 pour mémoriser dans le module mémoire au moins une partie du premier ensemble de caractéristiques biométriques et du deuxième ensemble de caractéristiques biométriques.

Il peut être prévu en outre de mémoriser le premier ensemble de caractéristiques biométriques et le deuxième ensemble de caractéristiques biométriques dans une base de données centralisée avec les informations figurant dans la zone lisible par machine. Il peut également être prévu de mémoriser l'un des troisième et quatrième ensembles de caractéristiques biométriques dans le module mémoire du document D et/ou dans la base de données centralisée avec les informations figurant dans la zone lisible par machine.

L'unité de traitement 1 utilise l'afficheur 6 pour décrire le déroulement de l'enrôlement et émettre un message d'alerte lorsqu'au moins l'une des vérifications n'est pas validée.

Le procédé de reconnaissance biométrique de l'invention va maintenant être décrit. Ce procédé vise à s'assurer que le porteur du document d'identité D est bien son titulaire enrôlé.

Le programme informatique commande l'unité de traitement 1 pour la réalisation des étapes du procédé reconnaissance biométrique d'un individu porteur du document d'identité D.

Le porteur du document d'identité D commence par mettre le document d'identité D en regard de la caméra de lecture 5 et l'unité de traitement 1 commande une capture d'image du document D sur laquelle l'unité de traitement 1 lit les informations relatives au titulaire et au document d'identité D. L'unité de traitement 1 commande également l'émetteur/récepteur 4 pour lire les informations contenues dans le module mémoire du document d'identité D et les comparer aux informations lues. En cas de différences, l'unité de traitement 1 commande l'afficheur 6 pour diffuser un message d'alerte.

Le procédé de reconnaissance biométrique selon l'invention, comprend les étapes de :
- capturer au moyen de la caméra faciale 3 des images du visage de l'individu lors d'une première opération de détection et effectuer par l'unité de traitement 1 une première reconnaissance biométrique à partir d'un premier ensemble de caractéristiques biométriques détectées sur l'une de ces images ;
- faire détecter par l'unité de traitement 1 un troisième ensemble de caractéristiques biométriques sur les images capturées lors de la première opération de détection ;
- capturer au moyen du capteur d'empreinte 2 des images d'une empreinte d'un doigt de l'individu lors d'une deuxième opération de détection et effectuer par l'unité de traitement 1 une deuxième reconnaissance biométrique à partir d'un deuxième ensemble de caractéristiques biométriques détectées sur l'une de ces images ;
- faire détecter par l'unité de traitement 1 un quatrième ensemble de caractéristiques biométriques sur les images capturées lors de la deuxième opération de détection ;
- vérifier par l'unité de traitement 1 que le troisième ensemble de caractéristiques biométriques coïncide avec le quatrième ensemble de caractéristiques biométriques ;
- considérer l'individu reconnu en cas de succès des reconnaissances biométriques et si le troisième ensemble de caractéristiques biométriques correspond au quatrième ensemble de caractéristiques biométriques.

Comme précédemment, le troisième ensemble de caractéristiques biométriques et le quatrième ensemble de caractéristiques biométriques correspondent l'un à l'autre et comprennent des paramètres du flux sanguin de l'individu tels que la fréquence de pulsation et la phase. L'opération de vérification de correspondance du troisième ensemble de caractéristiques biométriques et du quatrième ensemble de caractéristiques biométriques consiste donc à vérifier que :
- la fréquence de pulsation détectée lors de la première détection est identique à la fréquence de pulsation détectée lors de la deuxième détection ;
- la phase détectée lors de la première détection correspond à la phase détectée lors de la deuxième détection en tenant compte du temps de propagation de la pulsation du coeur jusqu'à la zone de première détection et la zone de deuxième détection.

On notera que le premier ensemble de caractéristiques biométriques, constitué de caractéristiques biométriques de visage, et le deuxième ensemble de caractéristiques biométriques, constitué de caractéristiques biométriques d'empreinte digitale, sont détectés sur des parties différentes du corps de l'individu.

La première opération de reconnaissance biométrique est effectuée en comparant, au moyen de l'algorithme de matching, les caractéristiques biométriques de visage détectées lors de la première opération de détection aux caractéristiques biométriques de visage extraites du portrait numérisé mémorisé dans la mémoire du module mémoire du document D. Le module mémoire est interrogé par l'unité de traitement 1 en utilisant l'émetteur/récepteur 4.

La deuxième opération de reconnaissance biométrique est effectuée en comparant, au moyen de l'algorithme de matching, les caractéristiques biométriques d'empreinte digitale détectées lors de la deuxième opération de détection aux caractéristiques biométriques d'empreinte digitale mémorisées dans la mémoire du module mémoire du document D.

Les opérations de reconnaissance biométrique peuvent être réalisées après la vérification de la coïncidence des troisièmes et quatrièmes ensembles de caractéristiques biométriques.

Bien entendu, l'invention n'est pas limitée aux modes de réalisation décrits mais englobe toute variante entrant dans le champ de l'invention telle que définie par les revendications.

En particulier, lors de l'enrôlement au moins l'un du troisième ensemble de caractéristiques biométriques et du quatrième ensemble de caractéristiques biométriques est enregistré dans le document D. La reconnaissance biométrique comprend alors en outre une opération de détection de comparaison du troisième ensemble de caractéristiques biométriques détectées sur l'individu avec celui mémorisé dans le document D.

A titre d'exemples, le premier ensemble de caractéristiques biométriques et le deuxième ensemble de caractéristiques biométriques sont constitués de caractéristiques biométriques appartenant respectivement à :
- un doigt et à un visage ;
- deux doigts ;
- la main droite et la main gauche ;
- l'iris d'un oeil et une empreinte digitale...

Les caractéristiques biométriques de visage mémorisées peuvent être lues dans une mémoire d'un circuit intégré solidaire du document ou extraites d'une photographie du visage fixée ou imprimée sur le document.

Les caractéristiques biométriques peuvent être mémorisées dans un élément mémoire intégré à un document d'identité - par exemple un circuit intégré RFID ou NFC, ou bien encore un code-barres 3D - dans une mémoire d'une unité informatique de type ordinateur, serveur, terminal de télécommunication...

Les étapes de détection peuvent être inversées.

Le même procédé peut être utilisé pour un autre cas d'usage : on dispose d'un document d'identité avec un premier ensemble de caractéristiques biométriques (le visage par exemple) et l'on veut générer un autre document avec un deuxième ensemble de caractéristiques biométriques (une carte d'embarquement avec une empreinte par exemple). Le procédé est alors le suivant :
- on capture le premier ensemble de caractéristiques biométriques et le deuxième ensemble de caractéristiques biométriques ;
- on vérifie que le premier ensemble de caractéristiques biométriques capturées correspond à celui du document d'identité ;
- on capture un troisième ensemble de caractéristiques biométriques (le pouls au niveau du visage) et un quatrième ensemble de caractéristiques biométriques (le pouls au niveau du doigt) ;
- on vérifie que le troisième ensemble de caractéristiques biométriques et le quatrième ensemble de caractéristiques biométriques correspondent ;
- dans l'affirmative, on génère alors l'autre document en y incorporant le troisième ensemble de caractéristiques biométriques.

Le même procédé peut être utilisé pour encore un autre cas d'usage dans un aéroport :
- à l'enregistrement :
   - on capture le premier ensemble de caractéristiques biométriques et le deuxième ensemble de caractéristiques biométriques ;
   - on vérifie le premier ensemble de caractéristiques biométriques et le deuxième ensemble de caractéristiques biométriques ;
   - on capture un troisième ensemble de caractéristiques biométriques (le pouls au niveau du visage) et un quatrième ensemble de caractéristiques biométriques (le pouls au niveau du doigt) ;
   - on vérifie que le troisième ensemble de caractéristiques biométriques et le quatrième ensemble de caractéristiques biométriques correspondent ;
   - on stocke le troisième ensemble de caractéristiques biométriques dans une base de données.
_- au passage au contrôle ou à l'entrée de l'avion, on capture le troisième ensemble de caractéristiques biométriques et on vérifie qu'il correspond à celui qui est stocké dans la base (ceci permet de ne pas avoir à présenter de nouveau son document d'identité.

## Revendications

1. Procédé de reconnaissance biométrique d'individu, comprenant les étapes de :
- effectuer une première reconnaissance biométrique à partir d'un premier ensemble de caractéristiques biométriques détectées sur un individu lors d'une première opération de détection ;
- effectuer une deuxième reconnaissance biométrique à partir d'un deuxième ensemble de caractéristiques biométriques détectées sur cet individu lors d'une deuxième opération de détection, le deuxième ensemble de caractéristiques biométriques étant distinct du premier ensemble de caractéristiques biométriques ;
**caractérisé en ce que** le procédé comprend les étapes de :
- détecter un troisième ensemble de caractéristiques biométriques lors de la première détection et un quatrième ensemble de caractéristiques biométriques lors de la deuxième détection,
- vérifier que le troisième ensemble de caractéristiques biométriques coïncide avec le quatrième ensemble de caractéristiques biométriques ;
- considérer l'individu reconnu en cas de succès des reconnaissances biométriques et si le troisième ensemble de caractéristiques biométriques correspond au quatrième ensemble de caractéristiques biométriques.

2. Procédé selon la revendication 1, dans lequel le troisième ensemble de caractéristiques biométriques et le quatrième ensemble de caractéristiques biométriques comprennent des paramètres du flux sanguin de l'individu tels que tels que la fréquence de pulsation et la phase.

3. Procédé selon la revendication 1 ou la revendication 2, dans lequel le premier ensemble de caractéristiques biométriques et le deuxième ensemble de caractéristiques biométriques sont détectés sur des parties différentes du corps de l'individu.

4. Procédé selon la revendication 3, dans lequel le premier ensemble de caractéristiques biométriques est constitué de caractéristiques de visage.

5. Procédé selon la revendication 3 ou la revendication 4, le deuxième ensemble de caractéristiques biométriques est constitué de caractéristiques d'empreinte digitale.

6. Procédé d'enrôlement automatique d'un individu, aux fins de réalisation ultérieure d'une reconnaissance biométrique, par enregistrement d'un premier ensemble de caractéristiques biométriques détectées sur un individu lors d'une première opération de détection et d'un deuxième ensemble de caractéristiques biométriques détectées sur cet individu lors d'une deuxième opération de détection, le deuxième ensemble de caractéristiques biométriques étant distinct du premier ensemble de caractéristiques biométriques ;
**caractérisé en ce que** le procédé comprend les étapes de :
- détecter un troisième ensemble de caractéristiques biométriques lors de la première détection et un quatrième ensemble de caractéristiques biométriques lors de la deuxième détection,
- vérifier que le troisième ensemble de caractéristiques biométriques coïncide avec le quatrième ensemble de caractéristiques biométriques ;
- considérer l'enrôlement valable si le troisième ensemble de caractéristiques biométriques correspond au quatrième ensemble de caractéristiques biométriques.

7. Procédé selon la revendication 6, dans lequel au moins l'un du troisième ensemble de caractéristiques biométriques et du quatrième ensemble de caractéristiques biométriques est enregistré.

8. Procédé selon la revendication 6 ou la revendication 7, dans lequel le troisième ensemble de caractéristiques biométriques et le quatrième ensemble de caractéristiques biométriques comprennent des paramètres du flux sanguin de l'individu tels que tels que la fréquence de pulsation et la phase.

9. Dispositif de reconnaissance biométrique comprenant une unité de traitement reliée à au moins un organe d'acquisition de deux ensembles distincts de caractéristiques biométriques lors de deux opérations de détection, et un organe d'acquisition au cours des deux opérations de détection d'un troisième ensemble de caractéristiques biométriques et d'un quatrième ensemble de caractéristiques biométriques, l'unité de traitement étant agencée pour exécuter un programme informatique de manière à mettre en oeuvre un procédé selon l'une quelconque des revendications précédentes.
